# EUROPÄISCHE PATENTSCHRIFT

(11) **EP 1 072 652 B1**
(45) Veröffentlichungstag und Bekanntmachung des Hinweises auf die Patenterteilung: **02.11.2005**
(21) Anmeldenummer: 00114931.9
(22) Anmeldetag: 18.07.2000
(51) Int. Cl.: C09D 5/00, C09D 175/04

(54) **Beschichtungsmittel**
Coating compound
Composé de revêtement

(30) Priorität: 30.07.1999 DE 19943933
(43) Veröffentlichungstag der Anmeldung: 31.01.2001
(73) Patentinhaber: Bayer MaterialScience AG, 51368 Leverkusen (DE)
(72) Erfinder: Müller, Hanns-Peter, Dr., 51519 Odenthal (DE); Gruttmann, Horst, 51375 Leverkusen (DE); Petzoldt, Joachim, Dr., 40789 Monheim (DE); Müller, Heino, 51377 Leverkusen (DE); Meixner, Jürgen Dr., 47803 Krefeld (DE); Kurek, Gerald Dr., 51373 Leverkusen (DE)

(56) Entgegenhaltungen:
- EP-A- 0 517 029
- EP-A- 0 849 298
- DE-A- 4 016 713

## Beschreibung

Die vorliegende Erfindung betrifft lichtechte Beschichtungsmittel aus einem Gemisch aus mindestens zwei miteinander verträglichen, colöserfreien, wässrigen, anionischen Dispersionen A und B von Polyurethanpolyharnstoffen.

Die vorliegende Erfindung betrifft auch recyclisierbare Abziehlacke aus mindestens zwei verschiedenen colöserfreien, wässrigen, anionischen Dispersionen A und B von Polyurethanpolyharnstoffen, ein Verfahren zu ihrer Herstellung und ihre Verwendung als Lack, vorzugsweise als Abziehlack zum temporären Schutz von Kraftfahrzeugen, Flugzeugen, Stahl- und Aluminiumprofilen, Glas- und Kunststoffscheiben und beliebigen anderen Substraten und Verfahren zur Wiederverwertung der gebrauchten abgezogenen Lackschichten.

Anionische Polyurethanpolyharnstoffdispersionen sind prinzipiell bekannt. Auch colöserfreie, wässrige, anionische Polyurethandispersionen, Verfahren zu ihrer Herstellung und ihre Verwendung als Lacke, Beschichtungsmittel, Klebstoffe und Abziehlacke sind bekannt. In der DE-A 19 653 585 wird der einschlägige Stand der Technik gewürdigt. Die DE-A 19 653 585 als nächstliegender Stand der Technik beschreibt Polyharnstoffdispersionen die nach der physikalischen Trockung bei 20 bis 100°C, bevorzugt bei 20 bis 80°C transparente hochglänzende, UV-beständige, temperaturbeständige (-30 bis 80°C), gegen Niederschläge (organischer oder anorganischer Natur) resistente Lacke, die einerseits gut haften, andererseits durch Abziehen leicht entfernt werden können. Die Reißfestigkeit und Dehnung der Lackschichten sind angemessen hoch. Eine gemäß DE-A 19 653 585 erhältliche Lackdispersion wird im folgenden als Dispersion A bezeichnet.

Aus der WO 98/23692 sind Mischungen von Polyolefinen bekannt, die als Abziehlacke für Automobile verwendet werden. Jedoch enthalten diese Mischungen keine PUR-Bestandteile. Die hier beschriebenen Abziehlacke sind auch nicht recyclisierbar.

Es besteht nun von den Anwendern derartiger Lacke der Wunsch nach höherer Härte und geringerer Dehnbarkeit der als recyclisierbare Abziehlacke eingesetzten Polyurethanharnstoffe A.

Aufgabe der vorliegenden Erfindung ist es daher, neue wässrige anionische Polyurethan-Kunststoffe zur Verfügung zu stellen, die sich problemlos und umweltfreundlich anwenden lassen und dabei Lacke und Beschichtungen ergeben, die die Anforderungen an die Mechanik, Wetterfestigkeit, Lichtechtheit, Transparenz, Temperaturbeständigkeit, Abziehfähigkeit, Wasserfestigkeit, Resistenz gegen Niederschläge (organischer und anorganischer Natur) und der Recyclisierbarkeit erfüllen, und darüber hinaus eine hohe Härte und geringe Dehnbarkeit aufweisen.

Eine Möglichkeit, um höhere Härte der getrockneten Lackschichten zu erzeugen, besteht darin, die Polymermoleküle zu verzweigen. Verzweigte Polyurethanpolyharnstoffe, wie sie in der EP-A 0 242 731 beschrieben sind, weisen eine so hohe Härte auf, dass sie zur Herstellung von Beschichtungsmitteln für harte, unflexible Substrate z.B. als Parkettlack Verwendung finden. Auf Glasplatten, colöserfrei aufgetragen, weisen die gut haftenden Lackschichten nach dem Trocknen bei Raumtemperatur Risse auf. Diese Lackschichten sind als Film nicht abziehfähig. Eine in Anlehnung an EP-A 0 242 731 hergestellte Dispersion wird im folgenden als Dispersion B bezeichnet.

Es wurde nun überraschenderweise gefunden, dass man die gewünschten anwendungstechnischen Eigenschaften erhält, wenn man mindestens zwei miteinander mischbare, colöserfreie, wässrige anionische Dispersionen A und B von Polyurethanpolyharnstoffen mischt, deren trockene Filme A eine Glastemperatur TG im Bereich von -30°C bis -45°C aufweisen und B eine erste TG im Bereich von -30°C bis -45°C und eine zweite TG im Bereich von +45°C bis +60°C aufweisen und das erfindungsgemäße Gemisch von A und B nur eine TG im Bereich von -30°C bis -45°C aufweist.

Es ist ausgeprochen überraschend, dass eine Mischung von Dispersionen A und Dispersionen B cohärente, abziehfähige und recylisierbare Filme ausbildet, da der Fachmann erwarten mußte, dass die gute Haftung der Dispersion B sich auch auf die Lackmischung von Dispersion A und B überträgt. Dies ist aber gerade nicht der Fall. Bei den erfindungsgemäßen Gemischen erhält man hochglänzende, hochtransparente, lichtechte und harte Lackschichten mit hoher Fülle, guter Abziehfähigkeit und Recyclisierbarkeit.

Gegenstand der Erfindung sind daher Beschichtungsmittel, bestehend aus einem Gemisch aus mindestens zwei miteinander mischbaren, colöserfreien, wässrigen anionischen Dispersionen A und B von Polyurethanpolyharnstoffen, dadurch gekennzeichnet, dass die Polyurethandispersion A als trockener Film eine TG im Bereich von - 30°C bis -45°C aufweist und die Polyurethandispersion B eine erste TG im Bereich von -30°C bis -45°C aufweist und eine zweite TG im Bereich von +45°C bis +60°C aufweist und das Gemisch von A und B nur eine TG im Bereich von -30°C bis -45°C aufweist.

Daraus hergestellte Lacke sind dadurch gekennzeichnet, dass sie in Form einer Mischung aus mindestens zwei miteinander verträglichen wässrigen Dispersionen auf beliebige Substrate aufgebracht und bei Temperaturen bis zu 150°C getrocknet werden.

Gegenstand der Erfindung ist auch ein Verfahren zur Herstellung der erfindungsgemäßen Beschichtungsmittel, dadurch gekennzeichnet, dass man mindestens zwei verschiedene colöserfreie, wässrige, anionische Dispersionen A und B von Polyurethanpolyharnstoffen getrennt herstellt und anschließend die wässrigen Dispersionen von A und B in Mischungsverhältnissen von 50 bis 90, vorzugsweise 55 bis 85 Teile A zu 10 bis 50, vorzugsweise 15 bis 45 Teile B mischt (Gewichtsanteile bezogen auf Festkörper).

Gegenstand der Erfindung ist auch die Verwendung der Gemische der wässrigen Dispersionen A und B als hochglänzende, lichtechte, wetterfeste, lösemittelfreie Lacke und Überzüge zum Schutz von Kraftfahrzeugen, Stahl-, Aluminium- und Metallgegenständen jeglicher Art, Glas- und Kunststoffgegenständen jeglicher Art, mineralischen Untergründen, Mauerwerk oder Natursteinen, zum Korrosionsschutz von Schiffen, Brücken, Flugzeugen, Eisenbahnen, zum Schutz von Holz- und Naturstoffgegenständen und beliebigen anderen Substraten durch Tauchen, Rakeln, Gießen, Sprühen, Pinseln, Spritzen und anschließendes Trocknen bei 20°C bis 150°C.

Gegenstand der Erfindung ist auch die Verwendung der Gemische der wässrigen Dispersionen A und B als recyclisierbare Abziehlacke zum temporären Schutz von Kraftfahrzeugen, Eisenbahnen, Schiffen, Möbeln, Metallgegenständen, mineralischen Gegenständen, Glas- und Kunststoffgegenständen und beliebigen anderen Substraten durch Tauchen, Rakeln, Gießen, Sprühen, Spritzen, Pinseln und anschließendes Trocknen bei 20 bis 100°C, bevorzugt 20 bis 80°C, durch Wärme oder Infrarotlicht, Mikrowellenbestrahlung oder Beschallung.

Die erfindungsgemäßen Überzüge sind wasserfeste, transparente, reißfeste, UV-beständige, temperaturbeständige, gegen Niederschläge (organischer oder anorganischer Natur) beständige, gegebenenfalls pigmentierte Beschichtungen die einerseits auf den Substraten haften, andererseits durch Abziehen leicht entfernt werden können.

Die Dispersionen A für das erfindungsgemäße lichtechte Beschichtungsmittel, bestehen aus colöserfreien wäßrigen, anionischen Dispersionen von Polyurethanpolyharnstoffen, deren Festkörper das zumindest teilweise in der Salzform vorliegende Umsetzungsprodukt enthält aus
a) einem NCO-Prepolymer aus
   i) 20 bis 60 Gew.-% eines Diisocyanates ausgewählt aus der Gruppe der aliphatischen Diisocyanate, cycloaliphatischen Diisocyanate und Mischungen daraus,
   ii) 20-80 Gew.-% eines Makrodioles mit einem Molgewicht von 500 bis 10 000 und Gemische daraus,
   iii) 2 bis 12 Gew.-% 2,2-Bis-(hydroxymethyl)-alkan-monocarbonsäuren, bevorzugt Dimethylolpropionsäure,
   iv) 0 bis 15 Gew.-% kurzkettiger Diole mit einem Molekulargewicht von 62 bis 400,
   v) 0 bis 10 Gew.-% monofunktioneller Alkohole als Kettenregler mit einem Molekulargewicht 32 bis 350,
b) 0 bis 15 Gew.-% Diamine des Molekulargewichtsbereichs 60 bis 300 als Kettenverlängerer,
c) 0 bis 10 Gew.-% Kettenregler, ausgewählt aus der Gruppe der Monoamine, Alkanolamine und Ammoniak,
d) 0 bis 3 Gew.-% Wasser und
e) 0,1 bis 10 Gew.-% Neutralisationsmittel,
wobei sich die genannten Prozentangaben zu 100 % ergänzen mit der Maßgabe, dass man in der Prepolymerstufe a) einen Wert von 65 bis 85 %, vorzugsweise 75 bis 80 % des berechneten NCO-Gehalts einstellt.

Die Dispersionen B für das erfindungsgemäße lichtechte Beschichtungsmittel bestehen aus colöserfreien wässrigen, anionischen Dispersionen von Polyurethanharnstoffen, deren Festkörper das zumindest teilweise in der Salzform vorliegende Umsetzungsprodukt enthält aus:
a) einem NCO-Prepolymer aus
   i) 20 bis 60 Gew.-% eines Diisocyanates ausgewählt aus der Gruppe der aliphatischen Diisocyanate, cycloaliphatischen Diisocyanate, und Mischungen daraus,
   ii) 10 bis 80 Gew.-% eines Makrodioles mit einem Molekulargewicht von 500 bis 10 000 und Gemische daraus,
   iii) 2 bis 12 Gew.-% 2,2-Bis-(hydroxymethyl)-alkan-monocarbonsäuren, bevorzugt Dimethylolpropionsäure,
   iv) 0 bis 15 Gew.-% kurzkettiger Diole und Triole mit einem Molekulargewicht von 62 bis 400,
   v) 0 bis 10 Gew.-% monofunktioneller Alkohole und Polyether als Kettenregler mit einem Molekulargewicht von 32 bis 2500,
b) 0 bis 15 Gew.-% Diamine und Triamine des Molekulargewichtsbereichs 60 bis 300 als Kettenverlängerer,
c) 0 bis 10 Gew.-% Kettenregler, ausgewählt aus der Gruppe der Monoamine, Alkanolamine und Ammoniak,
d) 0 bis 3 Gew.-% Wasser und
e) 0,1 bis 10 Gew.-% Neutralisationsmittel,
wobei sich die genannten Prozentangaben zu 100 % ergänzen mit der Maßgabe, dass die Verzweigung sowohl durch Triole als auch durch Triamine erreicht wird und nicht beide, a) iv) und b), Null sind.

In der Regel bestehen die Dispersionen A und B aus den nachstehend näher beschriebenen Komponenten; die Besonderheiten der Dispersionen B werden in schluß daran offenbart.

Als Komponente a) i) werden bevorzugt aliphatische und/oder cycloaliphatische Diisocyanate verwendet, wie z.B. Isophorondiisocyanat (IPDI), 4,4'-Dicyclohexylmethandiisocyanat, 1-Methyl-2,4-diisocyanato-cyclohexan und 1-Methyl-2,6-diisocyanato-cyclohexan in beliebigen Mischungsverhältnissen, 1,6-Hexamethylen-diisocyanat und/oder 1,3-Cyclohexan-diisocyanat.

Die Mitverwendung von geringen Anteilen an aromatischen Diisocyanaten wie z.B. 2,4- und 2,6-Toluoldiisocyanat oder 2,4'- und 4,4'-Diphenylmethandiisocyanat ist ebenfalls möglich.

Als Komponente a) ii) werden Makrodiole mit einem Molekulargewicht von 500 bis 10 000 eingesetzt. Hierbei handelt es sich bevorzugt um Polyesterdiole durch setzung von Dicarbonsäuren mit Diolen gegebenenfalls unter Zuhilfenahme üblicher Veresterungskatalysatoren vorzugsweise nach dem Prinzip einer Schmelz- oder Aceotropkondensation bei Temperaturen von 140 - 240°C.

Beispiele geeigneter Säuren oder Anhydride sind Adipinsäure, Bernsteinsäure(anhydrid), Maleinsäure(anhydrid), Sebacinsäure, Azelainsäuren, die unterschiedlichsten handelsüblichen Dimerfettsäuren (in hydrierter und nicht-hydrierter Form), Phthalsäure(anhydrid), Isophthalsäure, Tetrahydrophthalsäure(anhydrid), 1,4-Cyclohexandicarbonsäure, Hexahydrophthalsäure(anhydrid). Als Diole kommen die technisch verfügbaren Diole zum Einsatz, wie z.B. Ethylenglykol, 1,2- und 1,3-Propandiol, 1,3- und 1,4-Butandiol, 1,6- Hexandiol, Diethylenglykol, Dipropylenglykol, Neopentylglykol oder Mischungen derartiger Diole. Bevorzugt sind Polyesterdiole aus Adipinsäure, Hexandiol und Neopentylglykol.

Ebenfalls geeignet sind Polycarbonatdiole, Polycaprolactondiole, Hydroxypolytetrahydrofurane oder Hydroxypolyether auf Basis von Propylenoxid.

Geeignete Polycarbonatdiole werden z.B. erhalten, indem Kohlensäurederivate, wie z.B. Diphenylcarbonat oder Phosgen mit Alkoholen, vorzugsweise Diolen der genannten Art, umgesetzt werden.

Die mittlere Molmasse dieser Polyole liegt zwischen 500 und 10 000, bevorzugt zwischen 700 und 4000, besonders bevorzugt sind Makrodiole mit Molmassen zwischen 1000 und 2500.

Bei den Ausgangskomponenten a) iii) handelt es sich bevorzugt um 2,2-Bis-(hydroxymethyl)-alkanmonocarbonsäuren mit insgesamt 5 - 8 Kohlenstoffatomen, d.h. Verbindungen der allgemeinen Formel (I) 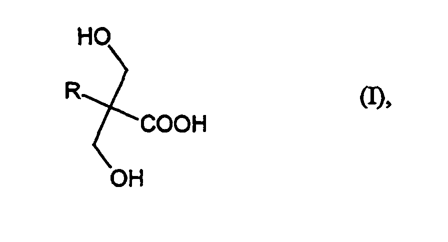 in welcher
- R: für einen Alkylrest mit 1 - 4 Kohlenstoffatomen steht.

Ganz besonders bevorzugt ist 2,2-Dimethylolpropionsäure.

Als Ausgangskomponente a) iv) kommen die beschriebenen kurzkettigen Diole vom Molekulargewicht 62 - 400 in Betracht. Besonders bevorzugt ist 1,4-Butandiol.

Als Ausgangskomponente a) v) kommen in Betracht, Methanol, Ethanol, Butanol, Hexanol, 2-Ethylhexanol, Oktanol und Dodecanol und beliebige Alkohole des Molekulargewichts 32 bis 350.

Als Komponente b) können alle aliphatischen und/oder cycloaliphatischen Verbindungen verwendet werden, die mindestens zwei gegenüber Isocyanaten reaktive Aminogruppen tragen. Hierfür in Frage kommen insbesondere Ethylendiamin, Propylendiamin, Hexamethylendiamin, Isophorondiamin, p-Xylylendiamin, 4,4'-Diamino-dicyclohexylmethan und 4,4'-Diamino-3,3'-dimethyldicyclohexylmethan.

Als Komponente c) kommen zum Beispiel Ammoniak, monofunktionelle Amine, wie Methylamin, Ethylamin, n-Propylamin, Isopropylamin und Cyclohexylamin, Octylamin, Diethylamin, Dibutylamin, sowie Aminoalkohole wie Ethanolamin, Diethanolamin und Propanolamin in Betracht.

Als Neutralisationsmittel e) sind zum Beispiel Ammoniak, N-Methylmorpholin, Dimethylisopropanolamin, Triethylamin, Dimethylethanolamin, Methyldiethanolamin, Triethanolamin, Morpholin, Tripropylamin, Ethanolamin, Diethanolamin, Triisopropanolamin, N-Ethyl-diisopropylamin und Gemische daraus geeignet.

In einer bevorzugten Ausführungsform werden die Komponenten a)i), ii) und iii) in einem Reaktor vorgelegt und unter wasserfreien Bedingungen in einem Temperaturbereich von 50 - 150°C, bevorzugt 50 - 110°C, umgesetzt, danach wird abgekühlt und dem Ansatz technisch übliches Aceton sowie das kurzkettige Diol (iv) von MG 62-400 und gegebenenfalls monofunktionelle Alkohole (v) zugegeben und solange erhitzt, bis der NCO-Gehalt der Mischung auf einen Wert von 65 bis 85 % des berechneten NCO-Gehalts gefallen ist. Auf diese Weise entsteht das NCO-Prepolymer. Danach wird der Ansatz mit weiterem Aceton verdünnt und mit der berechneten Menge eines Gemisches aus Diamin und Kettenabbrecher - gelöst in Wasser - versetzt. Auf diese Weise setzt man 90 % der NCO-Gruppen des Präpolymeren mit dem Kettenverlängerer dem Diamin und dem Kettenabbrecher um, den Rest läßt man mit dem vorhandenen Wasser zum erfindungsgemäßen Polyurethanpolyharnstoff abreagieren.

Die Polymeraufbaureaktion wird bevorzugt ohne die Verwendung von Katalysatoren durchgeführt, es ist aber auch möglich, die in der Isocyanatchemie bekannten Katalysatoren einzusetzen (z.B. tert.-Amine wie Triethylamin, Zinnverbindungen wie Zinn-II-octoat, Dibutylzinndilaurat u. a. gebräuchliche Katalysatoren).

Wenn kein NCO mehr nachweisbar ist (IR-Kontrolle), gibt man dem Ansatz die berechnete Menge Neutralisationsmittel, bevorzugt Ammoniaklösung zu, so dass 50-60 % der vorliegenden Carboxylgruppen durch den Ammoniak neutralisiert werden.

Durch Zugabe von Wasser und anschließendem Entfernen des eingesetzten Acetons durch Destillation stellt man die gewünschte Festkörperkonzentration ein. Polyurethanpolyharnstoffdispersionen, die nach dem erfindungsgemäßen Verfahren gewonnen werden, besitzen 20 - 60 Gew.-% Feststoff bevorzugt 30 - 40 Gew.-% Feststoff in Wasser, ihre mittleren Teilchendurchmesser betragen 20 - 1.000 nm, bevorzugt 50 - 500 nm.

Die pH-Werte der weißen, erfindungsgemäßen, lagerstabilen Polyurethanpolyharnstoffdispersionen liegen im Bereich von 6 - 9.

Geeignete Dispersionen B werden nach den bekannten Verfahren des Standes der Technik erhalten. Herstellungsmethoden derartiger verzweigter Polyurethankunststoffe sind z.B. in der EP-A 0 242 731 enthalten. Die EP-A 0 269 972 enthält durch einwertige Polyetheralkohole modifizierte und mit Ammoniak neutralisierte Polyurethanpolyhamstoff-Dispersionen. Die Dispersionen B enthalten bevorzugt als Verzweiger Triole wie z.B. Trimethylolpropan und Glycerin oder Triamine wie z.B. Diethylentriamin.

Die bevorzugten Polyetheralkohole sind monofunktionell, bestehen aus Ethylenoxid und Propylenoxid, gestartet auf n-Butanol und besitzen mittlere Molmassen von 250 bis 2500. Da diese Polyetheralkohole als nichtionische hydrophile Gruppen wirken, enthalten Sie vorzugsweise mehr als 50 Gew.-% Ethylenoxid in der Kette.

Die Dispersionen A und B können mit anderen anionischen oder nicht ionischen Dispersionen verschnitten werden, wie z.B. mit Polyvinylacetat, Polyethylen-, Polystyrol-, Polybutadien-, Polyvinylchlorid-, Polyacrylat- und Copolymerisat-Kunststoffdispersionen.

Die Dispersionen A und B werden im Harzfestkörper-Verhältnis von 50 bis 90 Teile A zu 10 bis 50 Teile B bevorzugt 55 bis 85 Teile A zu 15 bis 45 Teile B vermischt.

Eine gegebenenfalls gewünschte pH-Anpassung der Mischungen kann mit organischen oder anorganischen Basen erfolgen, wie z.B. Ammoniak, Alkalicarbonate, Amine, Aminoalkohole. Dabei sind die organischen Basen bevorzugt. Ganz besonders bevorzugt ist 2-Amino-2-methyl-1-propanol.

Bei der Formulierung der Lacke können die in der Lackchemie üblichen Hilfsmittel, wie z.B. Pigmente, Lichtstabilisatoren, Antiabsetzmittel, Verdicker, oberflächenaktive Verbindungen, Entschäumer etc. eingesetzt werden.

Die Applikation der Lacke erfolgt nach den üblichen Methoden der Lacktechnologie durch Tauchen, Rakeln, Gießen, Sprühen, Spritzen, Pinseln oder Walzen. Sie dienen als Abziehlack zum temporären Schutz von Kraftfahrzeugen, Stahl- und Aluminiumprofilen, Glas- und Kunststoffscheiben bzw. Artikeln. Nach Applikation werden die lackierten Teile bei Raumtemperatur oder bei erhöhter Temperatur bis zu 100°C getrocknet.

Trocknet man die erfindungsgemäßen Polyurethanharnstoffdispersionen bis zu 30 Minuten bei 140-150°C, so entstehen auf den Substraten gut haftende Überzüge. Trocknungstemperaturen über 150°C sind selbstverständlich auch möglich, aber die Anwendung derart hoher Temperaturen ist im allgemeinen unwirtschaftlich.

Die Recyclisierung der gebrauchten, abgezogenen Lackschichten ist sehr einfach. Die abgezogenen Lackschichten werden, gegebenenfalls nach vorhergehender Reinigung, mechanisch zerkleinert, gegebenenfalls unter Erwärmung in einem Reaktionskessel in Aceton gelöst, nach Auflösen gegebenenfalls filtriert mit der berechneten Menge an Neutralisationsmittel bevorzugt Ammoniak versetzt, mit Wasser auf den gewünschten Feststoffgehalt der angestrebten wäßrigen Polyurethanpolyharnstoffdispersion verdünnt und das Aceton gegebenenfalls unter vermindertem Druck abdestilliert.

Eine andere Möglichkeit der Recyclisierung der gebrauchten, abgezogenen Lackschichten besteht darin, dass man die gebrauchten, abgezogenen Lackschichten gegebenenfalls nach vorhergehender Reinigung mechanisch zerkleinert und anschließend unter Anwendung von Temperatur und Druck in heizbaren Pressen zu Polyurethanplatten verpresst oder die zerkleinerten Lackschichten im Extruder unter Anwendung von Temperatur, Scherung und Förderung zu thermoplastischen Endlosstränge extrudiert und die erhaltenen Stränge nach bekannten Granuliermethoden zu Zylinder-, Kugel-, Linsen- oder Rautengranulaten granuliert. Derartige Granulate finden Verwendung zur Herstellung von technischen Artikeln als thermoplastische Elastomere durch weiteres Verarbeiten in bekannten Verfahren der Kunststofftechnik, z.B. durch Spritzgießen, Blasformen, Tiefziehen, Slush-molding oder Flachextrusion.

### Beispiele

### Beispiel 1: Dispersion A

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 Stunde Reaktionszeit bei 110°C wird der Ansatz auf 60°C abgekühlt und in 100 g Aceton gelöst. Nach Zugabe von 18 g (0,2 mol) 1,4-Butandiol wird 22 Stunden bei 50°C nachgerührt. Der NCO-Gehalt beträgt 1,60 % (berechnet 2,04 %). Man verdünnt mit 500 g Aceton. Zum NCO-Prepolymer wird bei 50°C eine Mischung aus 10,6 g (0,062 mol) Isophorondiamin, 1,07 g (0,016 mol) 25 %ige Ammoniaklösung und 60 g Wasser gegeben. Anschließend rührt man 5 Stunden bei 50°C nach. Es wird mit 3,4 g (0,05 mol) 25 %iger Ammoniaklösung neutralisiert und mit 450 g Wasser dispergiert. Das Aceton entfernt man bis 50°C und 150 mbar und erhält so eine weiße Dispersion mit einem Feststoffgehalt von 39,2 % und einer mittleren Teilchengröße von 263 nm.

Der Neutralisationsgrad beträgt 50 %. Die TG (Glastemperatur) eines getrockneten Films liegt bei -38,0°C.

### DSC-Messungen:

Um gleiche Anfangsbedingungen zu erreichen, werden die Proben 3 Tage im Normklima (NK) gelagert und unter NK-Bedingungen in dichte DSC-Kapseln verpackt.

### DSC-Gerät:

### Differential-Scanning-Calorimeter DSC-2 (Fa. Perkin-Elmer)

Zwei aufeinanderfolgende Aufheizungen von -100°C bis +80°C (1. Aufh.) und -100°C bis + 120°C (2. Aufh.), Heizrate 20°C/min, dazwischen schnelle Abkühlung auf die Starttemperatur -100°C, Stickstoffspülung, Einwaage zwischen 12,9 mg und 13,3 mg Probenmasse in 30 µl-Kapseln.

Auswertung: ( 2. Aufh. ) Glasübergang (Glastemperatur, TG, als Mitte der Glasstufe, Höhe der Glasstufe).

### Beispiel 2: Dispersion A

Man verfährt wie in Beispiel 1, ersetzt jedoch den Ammoniak als Neutralisationsmittel durch 3,56 g (0,04 mol) Dimethylethanolamin. Nach dem Entfernen des Acetons erhält man eine weiße Dispersion mit einem Feststoffgehalt von 35 % und einer mittleren Teilchengröße von 309 nm.

Der Neutralisationsgrad beträgt 40 %.

### Beispiel 3: Dispersion A

Man verfährt wie in Beispiel 1, neutralisiert jedoch mit 4,08 g (0,06 mol) 25 %iger Ammoniaklösung und dispergiert mit 680 g Wasser. Nach dem Entfernen des Acetons erhält man eine weiße Dispersion mit einem Feststoffgehalt von 31,4 % und einer mittleren Teilchengröße von 183 nm.
Der Neutralisationsgrad beträgt 60 %.

### Beispiel 4: Dispersion A

In einem Reaktionsgefäß werden 245,1 g (0,125 mol) eines Polyesters aus Adipinsäure, 1,2-Ethandiol und 1,4-Butandiol (molares Verhältnis der Glycole 67:33) mit einem durchschnittlichen Molekulargewicht von 1961 g/mol und 1,73 % OH 30 Minuten bei 120°C und 10 mbar entwässert. Unter Stickstoff trägt man 16,75 g (0,125 mol) Dimethylol-propionsäure und 131 g (0,5 mol) Dicyclohexylmethan-4,4'-diisocyanat ein. Nach 1 Stunde Reaktionszeit bei 110°C wird der Ansatz auf 80°C abgekühlt und in 250 g Butanon-2 gelöst. Nach Zugabe von 11,25 g (0,125 mol) 1,4-Butandiol wird 12 Stunden bei 80°C nachgerührt. Der NCO-Gehalt beträgt 1,36 % (berechnet 1,61 %). Man verdünnt bei 50°C mit 500 g Aceton. Zum NCO-Prepolymer wird bei 50°C eine Mischung aus 13,6 g (0,08 mol) Isophorondiamin, 1,36 g (0,02 mol) 25 %ige Ammoniaklösung und 100 g Wasser gegeben. Anschließend rührt man 1 Stunde bei 50°C nach. Es wird mit 4,45 g (0,05 mol) Dimethylethanolamin neutralisiert und mit 530 g Wasser dispergiert. Nach dem Entfernen der organischen Lösungsmittel bis 50°C und 100 mbar erhält man so eine weiße Dispersion mit einem Feststoffgehalt von 38,7 % und einer mittleren Teilchengröße von 480 nm.
Der Neutralisationsgrad beträgt 40 %.

### Beispiel 5: Dispersion A

In einem Reaktionsgefäß werden 170 g (0,1 mol) des Polyesters aus Beispiel 1 30 Minuten bei 120°C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 Stunde Reaktionszeit bei 110°C wird der Ansatz auf 60°C abgekühlt und in 100 g Aceton gelöst. Nach Zugabe von 18 g (0,2 mol) 1,4-Butandiol wird 21 Stunden bei 50°C nachgerührt. Der NCO-Gehalt beträgt 1,63 % (berechnet 2,04 %). Man verdünnt mit 500 g Aceton. Zum NCO-Prepolymer wird bei 50°C eine Mischung aus 1,09 g (0,016 mol) 25 %ige Ammoniaklösung und 60 g Wasser gegeben und 21 Stunden bei 50°C nachgerührt. Es wird mit 3,4 g (0,05 mol) 25 %iger Ammoniak-lösung neutralisiert und mit 450 g Wasser dispergiert. Nach dem Entfernen des Acetons bis 50°C und 150 mbar erhält man eine weiße Dispersion mit einem Feststoffgehalt von 39,8 % und einer mittleren Teilchengröße von 210 nm.

### Beispiel 6: Dispersion B

In einem Reaktionsgefäß werden 60 g (0,035 mol) eines Polyesters aus Adipinsäure, 1,6-Hexandiol und Neopentylglykol (molares Verhältnis der Glycole 67:33) mit einem durchschnittlichen Molekulargewicht von 1700 g/mol, 90,5 g (0,108 mol) eines Polyesters aus Adipinsäure und 1,6-Hexandiol mit einem durchschnittlichen Molekulargewicht von 840 g/mol und 17,8 g (0,008 mol) eines Polyethers aus n-Butanol, 83 % Ethylenoxid und 17 % Propylenoxid mit einem durchschnittlichen Molekulargewicht von 2240 g/mol 30 Minuten bei 120°C und 15 mbar entwässert. Unter Stickstoff trägt man 20,75 g (0,155 mol) Dimethylolpropionsäure ein und gibt bei 75°C 192 g (0,86 mol) Isophorondiisocyanat in einem Guß zu. Nach 3 Stunden Rührzeit bei 75°C werden zu dem Ansatz 13,25 g (0,147 mol) 1,4-Butandiol und 5,25 g (0,04 mol) Trimethylol-propan gegeben. Nach weiteren 3 ½ Stunden Rührzeit beträgt der NCO-Gehalt 7,5 % (berechnet 7,51 % NCO). Das Prepolymer wird in 992 g Aceton gelöst und bei 50°C mit einer Mischung aus 16,3 g (0,27 mol) Ethylendiamin, 20,2 g (0,12 mol) 9,7 %ige Ammoniaklösung und 200 g Wasser umgesetzt. Man rührt 4 ½ Stunden bei 50°C nach, neutralisiert mit einer Mischung aus 13,6 g (0,078 mol) 9,7 %iger Ammoniaklösung und 10 g Wasser und dispergiert nach weiteren 15 Minuten Nachrühren bei 50°C durch Zugabe von 525 g Wasser. Das Aceton wird durch Destillation bis 50°C und 150 bar entfernt. Man erhält eine weiße Dispersion mit einem Feststoffgehalt von 35 % und einer mittleren Teilchengröße von 120 nm.
Der Neutralisationsgrad beträgt 50 %.

Die erste TG einer getrockneten Probe B liegt bei -43,5°C und die zweite TG bei +56,5°C.

### Beispiel 7: Herstellung eines Abziehlackes

### a) Transparente Formulierung

Von der Dispersion A, aus Beipiel 1, 39,2 %ig werden 75,52 Gew.-Tle. mit 21,12 Gew.-Tlen. der 35%-igen Dispersion B, aus Beispiel 6, unter Rühren vorvermischt und mit ca. 0,33 Gew.-Tlen. 90%-igem Aminomethylpropanol auf einen pH-Wert von ca. 8,3 eingestellt. Anschließend werden zügig 0,37 Gew.-Tle. eines handelsüblichen Acrylatverdickers wie Borchigel® A LA (Borchers GmbH, Monheim), 10%-ig in dest. Wasser, 1.11 Gew.-Tle. eines 1%-igen handelsüblichen Entschäumers (Entschäumer E, Bayer AG), 0,51 Gew.-Tle. eines Benetzungsmittels wie Hydropalat 110 (Henkel) sowie 1,04 Gew.-Tle. eines wasserverdünnbaren Lichtschutzmittels (Sanduvur® 3055, Clariant GmbH)zugegeben und innig mittels Dissolver vermischt. Das System ist nach einer ca. 8 stündigen Reifezeit bei z.B. 23°C einsatzbereit für z.B. eine Airless-Spritzapplikation. Die TG einer getrockneten Lackschicht aus Dispersion A und B im angegebenen Mischungsverhältnis liegt bei -41°C.

### b) Weiß-lasierende Formulierung

Von der Dispersion A, aus Beispiel 1, 39,2%-ig werden 72,14 Gew.-Tle. mit 20,18 Gew.-Tlen. der 35%-igen Dispersion B, aus Beispiel 6, unter Rühren vorvermischt und mit ca. 0,32 Gew.-Tlen. 90%-igem Aminomethylpropanol auf einen pH-Wert von ca. 8,3 eingestellt. Anschließend werden zügig 4,38 Gew. der nachstehend aufgeführten Anreibepaste, 0,36 Gew.-Tle. eines handelsüblichen Acrylatverdickers wie Borchigel® A LA, (Borchers GmbH, Monheim), 10%-ig in dest. Wasser, 1.09 Gew.-Tle. eines 1%-igen handelsüblichen Entschäumers (Entschäumer E, Bayer AG), 0,51 Gew.-Tle. eines Benetzungsmittels wie Hydropalat 110 (Henkel) sowie 1,02 Gew.-Tle. eines wasserverdünnbaren Lichtschutzmittels zugegeben und innig mittels Dissolver vermischt. Das System ist nach einer ca. 8 stündigen Reifezeit bei z.B. 23°C einsatzbereit für z.B. eine Airless-Spritzapplikation.

Die Anreibepaste, die nach einer Vordispergierung mittels Dissolver ca. 30 Minuten auf einer Perlmühle unter Kühlung vermahlen wird, besteht aus 42,26 Gew.-Tlen. Dispersion A, 11,77 Gew.-Tlen. Dispersion B, 3,70 Gew.-Tlen. dest. Wasser und 41,48 Gew.-Tlen. Titandioxid wie TRONOX® R-KB-4 (Kerr McGee Pigments GmbH) sowie den handelsüblichen Additiven wie 0,45 Gew.-Tlen Benetzungsmittel Tego Wet 250 (Tego Chemie) und 0,34 Gew.-Tlen. Antiabsetzmittel wie Aerosil® R 972 von Degussa.

### Beispiel 8: Recylisierung

Von einer Abziehlackfolie, hergestellt aus den Dispersionen A und B im Gewichtsverhältnis von 80 : 20, wurde titrimetrisch ein Rest-Neutralisationsgrad von 2,8 % gefunden. 300 g dieser Folie wurden bei 45°C in 600 g Aceton und 90 g Wasser aufgelöst und mit 10,5 g 9,7 %iger Ammoniaklösung nachneutralisiert. Anschließend wurde mit 360 g Wasser dispergiert und das Aceton bis 40°C und 120 mbar entfernt. Die so erhaltene weiße Dispersion hat einen Feststoffgehalt von 40,5 % und einen gefundenen Neutralisationsgrad von 58,5 %. Mit einer 200 µm Rakel auf Glas aufgetragene Filme, sind nach 80°C Trocknung klar, glänzend und abziehbar.

## Patentansprüche

1. Beschichtungsmittel aus einem Gemisch aus mindestens zwei miteinander mischbaren, colöserfreien, wässrigen anionischen Dispersionen A und B von Polyurethanpolyharnstoffen, **dadurch gekennzeichnet, daß** die Polyurethandispersion A als trockener Film eine TG im Bereich von -30°C bis -45°C aufweist und deren Festkörper das zumindest teilweise in der Salzform vorliegende Umsetzungsprodukt enthält aus
a) einem NCO-Prepolymer aus
i) 20 bis 60 Gew.-% eines Diisocyanates ausgewählt aus der Gruppe der aliphatischen Diisocyanate, cycloaliphatischen Diisocyanate und Mischungen daraus,
ii) 20-80 Gew.-% eines Makrodioles mit einem Molgewicht von 500 bis 10 000 und Gemische daraus,
iii) 2 bis 12 Gew.-% 2,2-Bis-(hydroxymethyl)-alkanmonocarbonsäuren, bevorzugt Dimethylolpropionsäure,
iv) 0 bis 15 Gew.-% kurzkettiger Diole mit einem Molekulargewicht von 62 bis 400,
v) 0 bis 10 Gew.-% monofunktioneller Alkohole als Kettenregler mit einem Molekulargewicht 32 bis 350,
b) 0 bis 15 Gew.-% Diamine des Molekulargewichtsbereichs 60 bis 300 als Kettenverlängerer,
c) 0 bis 10 Gew.-% Kettenregler, ausgewählt aus der Gruppe der Monoamine, Alkanolamine und Ammoniak,
d) 0 bis 3 Gew.-% Wasser und
e) 0,1 bis 10 Gew.-% Neutralisationsmittel,
wobei sich die genannten Prozentangaben zu 100 % ergänzen mit der Maßgabe, daß man in der Prepolymerstufe a) einen Wert von 65 bis 85 % des berechneten NCO-Gehalts einstellt und die Polyurethandispersion B eine erste TG im Bereich von -30°C bis -45°C aufweist und eine zweite TG im Bereich von +45°C bis +60°C aufweist und deren Festkörper das zumindest teilweise in der Salzform vorliegende Umsetzungsprodukt enthält aus:
a) einem NCO-Prepolymer aus
i) 20 bis 60 Gew.-% eines Diisocyanates ausgewählt aus der Gruppe der aliphatischen Diisocyanate, cycloaliphatischen Diisocyanate, und Mischungen daraus,
ii) 10 bis 80 Gew.-% eines Makrodioles mit einem Molekulargewicht von 500 bis 10 000 und Gemische daraus,
iii) 2 bis 12 Gew.-% 2,2-Bis-(hydroxymethyl)-alkanmonocarbonsäuren, bevorzugt Dimethylolpropionsäure,
iv) 0 bis 15 Gew.-% kurzkettiger Diole und Triole mit einem Molekulargewicht von 62 bis 400,
v) 0 bis 10 Gew.-% monofunktioneller Alkohole und Polyether als Kettenregler mit einem Molekulargewicht von 32 bis 2500,
b) 0 bis 15 Gew.-% Diamine und Triamine des Molekulargewichtsbereichs 60 bis 300 als Kettenverlängerer,
c) 0 bis 10 Gew.-% Kettenregler, ausgewählt aus der Gruppe der Monoamine, Alkanolamine und Ammoniak,
d) 0 bis 3 Gew.-% Wasser und
e) 0,1 bis 10 Gew.-% Neutralisationsmittel,
wobei sich die genannten Prozentangaben zu 100 % ergänzen mit der Maßgabe, daß die Verzweigung sowohl durch Triole als auch durch Triamine erreicht wird und nicht beide, a) iv) und b), Null sind und das Gemisch von A und B nur eine TG im Bereich von -30°C bis -45°C aufweist.

2. Verfahren zur Herstellung von Beschichtungsmitteln gemäß Anspruch 1, **dadurch gekennzeichnet, dass** man mindestens zwei verschiedene colöserfreie, wässrige, anionische Dispersionen A und B von Polyurethanpolyharnstoffen getrennt herstellt und anschließend die wässrigen Dispersionen von A und B in Mischungsverhältnissen von 50 bis 90 Teile A zu 10 bis 50 Teile B (Gewichtsanteile), bezogen auf den Festkörper, mischt.

3. Verfahren gemäß Anspruch 2, **dadurch gekennzeichnet, daß** man die getrennt hergestellten Dispersionen A und B in Mischungsverhältnissen von 55 bis 85 Teile A zu 15 bis 45 Teile B (Gewichtsanteile) bezogen auf den Festkörper mischt.

4. Verwendung der Beschichtungsmittel gemäß Anspruch 1 als Lacke und Überzüge für Substrate jeder Art.

5. Verwendung der Beschichtungsmittel gemäß Anspruch 1 als recyclisierbare Abziehlacke zum temporären Schutz von Substraten jeder Art.

6. Lackschichten, enthaltend Beschichtungsmittel gemäß Anspruch 1.

7. Verfahren zur Herstellung von Lackschichten enthaltend Beschichtungsmittel gemäß Anspruch 1, **dadurch gekennzeichnet, dass** die Beschichtungsmittel in Form einer Mischung aus mindestens zwei miteinander verträglichen wässrigen Dispersionen auf beliebige Substrate aufgebracht und bei Temperaturen bis zu 150°C getrocknet werden.

## Claims

1. Coating compositions comprising a mixture of at least two mutually miscible, cosolvent-free, aqueous anionic dispersions A and B of polyurethane polyureas, **characterized in that** the polyurethane dispersion A as a dry film has a TG in the range from -30°C to -45°C and its solids comprises the reaction product, present at least partially in salt form, of
a) an NCO prepolymer formed from
i) 20% to 60% by weight of a diisocyanate selected from the group consisting of aliphatic diisocyanates, cycloaliphatic diisocyanates and mixtures thereof,
ii) 20-80% by weight of a macrodiol having a molar weight of 500 to 10 000, and mixtures thereof,
iii) 2% to 12% by weight of 2,2-bis(hydroxymethyl)alkanemonocarboxylic acids, preferably dimethylolpropionic acid,
iv) 0 to 15% by weight of short-chain diols having a molecular weight of 62 to 400,
v) 0 to 10% by weight of monofunctional alcohols as chain regulators having a molecular weight of 32 to 350,
b) 0 to 15% by weight of diamines of the molecular weight range 60 to 300 as chain extenders,
c) 0 to 10% by weight of chain regulators, selected from the group consisting of monoamines, alkanolamines and ammonia,
d) 0 to 3% by weight of water and
e) 0.1% to 10% by weight of neutralizing agent(s),
the stated percentages adding to 100% with the proviso that in the prepolymer stage a) a calculated NCO content of 65% to 85% is set and the polyurethane dispersion B has a first TG in the range from -30°C to -45°C and has a second TG in the range from +45°C to +60°C and its solids comprises the reaction product, present at least partially in salt form, of
a) an NCO prepolymer formed from
i) 20% to 60% by weight of a diisocyanate selected from the group consisting of aliphatic diisocyanates, cycloaliphatic diisocyanates and mixtures thereof,
ii) 10% to 80% by weight of a macrodiol having a molecular weight of 500 to 10 000, and mixtures thereof,
iii) 2% to 12% by weight of 2,2-bis(hydroxymethyl)alkanemonocarboxylic acids, preferably dimethylolpropionic acid,
iv) 0 to 15% by weight of short-chain diols and triols having a molecular weight of 62 to 400,
v) 0 to 10% by weight of monofunctional alcohols and polyethers as chain regulators having a molecular weight of 32 to 2500,
b) 0 to 15% by weight of diamines and triamines of the molecular weight range 60 to 300 as chain extenders,
c) 0 to 10% by weight of chain regulators, selected from the group consisting of monoamines, alkanolamines and ammonia,
d) 0 to 3% by weight of water and
e) 0.1% to 10% by weight of neutralizing agent(s),
the stated percentages adding to 100% with the proviso that the branching is achieved both by means of triols and by means of triamines and not both, a), iv) and b) are zero and the mixture of A and B has only one TG in the range from -30°C to -45°C.

2. Process for preparing coating compositions according to Claim 1, **characterized in that** at least two different cosolvent-free, aqueous, anionic dispersions A and B of polyurethane polyureas are prepared separately and then the aqueous dispersions of A and B are mixed in proportions of 50 to 90 parts of A to 10 to 50 parts of B (weight fractions), based on the solids.

3. Process according to Claim 2, **characterized in that** the separately prepared dispersions A and B are mixed in proportions of 55 to 85 parts of A to 15 to 45 parts of B (weight fractions) based on the solids.

4. Use of the coating compositions according to Claim 1 as coating materials and coatings for substrates of any kind.

5. Use of the coating compositions according to Claim 1 as recyclable strippable coating materials for temporary protection of substrates of any kind.

6. Coats comprising coating compositions according to Claim 1.

7. Process for producing coats comprising coating compositions according to Claim 1, **characterized in that** the coating compositions are applied in the form of a mixture of at least two mutually compatible aqueous dispersions to any desired substrates and dried at temperatures up to 150°C.

## Revendications

1. Produit de revêtement constitué d'un mélange d'au moins deux dispersions aqueuses anioniques A et B miscibles entre elles, sans cosolvant, de polyuréthannes polyurées, **caractérisé en ce que** la dispersion polyuréthanne A présente sous la forme d'un film sec une température de transition vitreuse de l'ordre de -30°C à -45°C et **en ce que** son corps solide contient le produit de conversion, présent au moins en partie sous la forme de sel, constitué de
a) un prépolymère NCO constitué de
i) 20 à 60 % en poids d'un diisocyanate sélectionné parmi le groupe des diisocyanates aliphatiques, des diisocyanates cycloaliphatiques et de mélanges de ceux-ci,
ii) 20-80 % en poids d'un macrodiol d'un poids moléculaire de 500 à 10 000 et de mélanges de ceux-ci,
iii) 2 à 12 % en poids d'acides monocarboxyliques de 2,2-bis-(hydroxyméthyl)-alcane, de préférence d'acide diméthylolpropanoïque,
iv) 0 à 15 % en poids de diols à courte chaîne d'un poids moléculaire de 62 à 400,
v) 0 à 10 % en poids d'alcools monofonctionnels d'un poids moléculaire de 32 à 350, servant de régulateurs de chaîne,
b) 0 à 15 % en poids de diamines d'un poids moléculaire de l'ordre de 60 à 300, comme prolongateurs de chaîne,
c) 0 à 10 % en poids de régulateurs de chaîne, sélectionnés parmi le groupe des monoamines, des alcanolamines et de l'ammoniac,
d) 0 à 3 % en poids d'eau et
e) 0,1 à 10 % en poids d'agent de neutralisation,
les indications en pour cent mentionnées se complétant à 100 % avec la condition qu'on règle dans la phase de prépolymère a) une valeur de 65 à 85 % de la teneur en NCO calculée et que la dispersion de polyuréthanne B présente une première température de transition vitreuse de l'ordre de -30°C à -45°C et une deuxième température de transition vitreuse de l'ordre de +45°C à +60°C et que son corps solide contient le produit de conversion, présent au moins en partie sous la forme de sel, constitué de:
a) un prépolymère NCO constitué de
i) 20 à 60 % en poids d'un diisocyanate sélectionné parmi le groupe des diisocyanates aliphatiques, des diisocyanates cycloaliphatiques et de mélanges de ceux-ci,
ii) 10 à 80 % en poids d'un macrodiol d'un poids moléculaire de 500 à 10 000 et de mélanges de ceux-ci,
iii) 2 à 12 % en poids d'acides monocarboxyliques de 2,2-bis-(hydroxyméthyl)-alcane, de préférence d'acide diméthylolpropanoïque,
iv) 0 à 15 % en poids de diols et triols à courte chaîne d'un poids moléculaire de 62 à 400,
v) 0 à 10 % en poids d'alcools monofonctionnels et de polyéthers d'un poids moléculaire de 32 à 2500, servant de régulateurs de chaîne,
b) 0 à 15 % en poids de diamines et triamines d'un poids moléculaire de l'ordre de 60 à 300, comme prolongateurs de chaîne,
c) 0 à 10 % en poids de régulateurs de chaîne, sélectionnés parmi le groupe des monoamines, des alcanolamines et de l'ammoniac,
d) 0 à 3 % en poids d'eau et
e) 0,1 à 10 % en poids d'agent de neutralisation,
les indications en pour cent mentionnées se complétant à 100 % avec la condition que la ramification est obtenue tant avec des triols qu'à l'aide de triamines et que les deux teneurs, a) iv) et b), ne sont pas toutes deux nulles et que le mélange de A et B présente une seule température de transition vitreuse de l'ordre de -30°C à -45°C.

2. Procédé de fabrication de produits de revêtement suivant la revendication 1, **caractérisé en ce qu'**on fabrique séparément au moins deux dispersions aqueuses anioniques de polyuréthannes polyurées sans cosolvant différentes et qu'on mélange ensuite les dispersions aqueuses de A et B dans des rapports de mélange de 50 à 90 parties de A pour 10 à 50 parties de B (parties en poids), rapportées au corps solide.

3. Procédé suivant la revendication 2, **caractérisé en ce qu'**on mélange les dispersions A et B fabriquées séparément dans des rapports de mélange de 55 à 85 parties de A pour 15 à 45 parties de B (parties en poids), rapportées au corps solide.

4. Utilisation des produits de revêtement suivant la revendication 1 comme laques et revêtements pour substrats de toute nature.

5. Utilisation des produits de revêtement suivant la revendication 1 comme laques pelables recyclables pour la protection temporaire de substrats de toute nature.

6. Couches de laques contenant un produit de revêtement suivant la revendication 1.

7. Procédé de fabrication de couches de laques contenant un produit de revêtement suivant la revendication 1, **caractérisé en ce que** les produits de revêtement sont appliqués sous la forme d'un mélange d'au moins deux dispersions aqueuses compatibles entre elles sur des substrats quelconques et sont séchés à des températures allant jusqu'à 150°C.
